# EUROPÄISCHE PATENTSCHRIFT

(11) **EP 3 475 025 B1**
(45) Veröffentlichungstag und Bekanntmachung des Hinweises auf die Patenterteilung: **28.07.2021**
(21) Anmeldenummer: 17732873.9
(22) Anmeldetag: 21.06.2017
(51) Int. Cl.: B23K 37/02, B23K 37/04, B23K 26/03, B23K 26/04, B23K 26/08, B23K 26/38, B23K 31/12

(54) **VERFAHREN UND VORRICHTUNG ZUR BESTIMMUNG EINER REFERENZ-FOKUSLAGE EINES STRAHLES EINER STRAHLBASIERTEN WERKZEUGMASCHINE DURCH DURCHFÜHREN EINER SEQUENZ VON TESTSCHNITTEN AN EINEM WERKSTÜCK**
METHOD AND DEVICE FOR DETERMINING A REFERENCE FOCAL POSITION OF A BEAM OF A BEAM-BASED MACHINE TOOL BY PERFORMING A SEQUENCE OF TEST CUTS ON A WORKPIECE
PROCÉDÉ ET DISPOSITIF POUR DÉTERMINER UNE POSITION DE POINT FOCAL DE RÉFÉRENCE D'UN FAISCEAU D'UNE MACHINE-OUTIL À FAISCEAU PAR EXÉCUTION D'UNE SÉQUENCE DE DÉCOUPES D'ESSAI SUR UNE PIÈCE À USINER

(30) Priorität: 22.06.2016 DE 102016111455
(43) Veröffentlichungstag der Anmeldung: 01.05.2019
(73) Patentinhaber: Trumpf Laser- und Systemtechnik GmbH, 71254 Ditzingen (DE)
(72) Erfinder: MEYER, Jeremy, 71229 Leonberg (DE)
(74) Vertreter: Grättinger Möhring von Poschinger Patentanwälte Partnerschaft mbB
(86) Internationale Anmeldenummer: PCT/EP2017/065291
(87) Internationale Veröffentlichungsnummer: WO 2017/220682

(56) Entgegenhaltungen:
- EP-A1- 0 437 676
- WO-A1-2004/050290
- DE-A1-102007 016 301

## Beschreibung

Die vorliegende Erfindung betrifft ein Verfahren zur Fokuslagebestimmung, insbesondere für laserbasierte Werkzeugmaschinen. Ferner betrifft die Erfindung eine Werkzeugmaschine mit zumindest teilautomatisierter Fokuslageeinstellung.

In strahlbasierten, insbesondere laserbasierten, Werkzeugmaschinen ist ein exaktes Positionieren einer Fokuslage (z.B. eines Laser- oder Elektronenstrahls) grundlegend für die Umsetzung der präzisen Bearbeitung von Werkstücken. Um Werkstücke hinreichend genau bearbeiten zu können, sei es durch z.B. Laserschneiden oder Laserschweißen, ist es erforderlich, den Laserstrahl mit der Stelle, an welcher er die höchste Leistungsdichte aufweist, in Kontakt mit dem Werkstück zu bringen. Allgemein weisen Werkzeugmaschinen hierzu Positioniersysteme (Translations- und Drehsysteme) auf, die ein genaues Einstellen des Bearbeitungsstrahls bezüglich des zu bearbeitenden Werkstücks erlauben. Beispielsweise werden in sogenannten Mehrachs-Lasersystemen Translationsbewegungen und Drehbewegungen für die Strahlachse bereitgestellt. Ferner können entsprechend Translations- und Drehbewegungen für das gehaltene Werkstück vorgesehen werden.

Es sind Verfahren bekannt, die auf einer manuellen oder optischen Vermessung von Schnittbreiten von in einem Blech vorgenommenen Einschnitten basieren, wobei die Einschnitte mit variierendem Abstand zwischen Werkstück und Strahlausgang (beispielsweise eines Bearbeitungskopfs einer Werkzeugmaschine) erzeugt wurden. Siehe dazu beispielsweise WO 2004/050290 A1 (Basis für den Oberbegriff der Ansprüche 1 und 13). Dem Einschnitt, für den eine minimale Schnittbreite bestimmt wurde, wird die aktuelle Fokuslage zugeordnet. Weitere Fokuseinstellverfahren sind aus JP 2637523 B2 und JPH 1076384 A bekannt.

DE 10 2007 016301 A1 offenbart ferner ein Verfahren bei dem ein Laserparameter eines Laserstrahls auf einen bestimmten Wert erfolgt und ein biologisches Präparat entlang einer Probenschneidelinie mit dem Laserstrahl geschnitten wird. Ein Bild der in dem Schritt erzeugten Probenschneidelinie wird aufgezeichnet. Das Verfahren beinhaltet einen automatischen Vergleich des Bildes der aufgezeichneten Probenschneidelinie mit einer Referenzschneidelinie,

EP 0 437 676 A1 offenbart ferner eine Laserschneidmaschine, bei der ein Laserstrahl durch eine Bearbeitungslinse gebündelt wird und der Laserstrahl und ein zu schneidendes Werkstück relativ zueinander bewegt werden. Die Laserschneidmaschine umfasst eine optische Achsenbewegungseinrichtung zum Bewegen des auf die Bearbeitungslinse treffenden Laserstrahls parallel zu einer optischen Achse zu einer gewünschten Position und Mittel zur Steuerung der Bewegung der optischen Achse, um die Achsenbewegungseinrichtung in Übereinstimmung mit einem Programm zu steuern.

Einem Aspekt dieser Erfindung liegt die Aufgabe zugrunde, ein Verfahren anzugeben, das eine zumindest teilautomatisierte Fokuslagebestimmung erlaubt.

Zumindest eine dieser Aufgaben wird gelöst durch ein Verfahren nach Anspruch 1 und durch eine Werkzeugmaschine nach Anspruch 13. Weiterbildungen sind in den Unteransprüchen angegeben.

In einem Aspekt umfasst ein Verfahren zur Bestimmung einer Referenz-Fokuslage eines Strahls einer strahlbasierten Werkzeugmaschine den Schritt des Bereitstellens einer Relativbewegungstrajektorie, die einen scheibenartigen Bereich hinsichtlich eines Umgebungsbereichs abgrenzt, wobei der scheibenartige Bereich über mindestens einen Stegbereich mit dem Umgebungsbereich verbunden ist, und den Schritt des Durchführens einer Sequenz von Testschnitten an einem Werkstück, wobei bei jedem Testschnitt im Werkstück eine Schnittstruktur durch Führen des Strahls entlang der Relativbewegungstrajektorie geschnitten wird und das Schneiden entlang des mindestens einen Stegbereichs der Relativbewegungstrajektorie bei unterschiedlich eingestellten Fokuslagen durchgeführt wird.

In einigen Ausführungsformen wird das Schneiden bei jeweils Testschnitt-spezifischen Positionen des Werkstücks im Verlauf des Strahls durchgeführt und die Testschnitt-spezifischen Positionen werden einem, sich entlang der Propagationsrichtung des Strahls erstreckenden, Testbereich von Fokuslagen zugeordnet.

Gemäß der Erfindung umfasst das Verfahren ferner den Schritt des Auswertens, ob bei einer einzelnen Schnittstruktur das Werkstück im scheibenartigen Bereich der Relativbewegungstrajektorie eine von mindestens einem Steg gehaltene Scheibe aufweist oder ob das Werkstück im scheibenartigen Bereich der Relativbewegungstrajektorie eine gemäß der Relativbewegungstrajektorie geformte Öffnung im Werkstück aufweist, und den Schritt des Zuordnens der Referenz-Fokuslage zu einer Position, insbesondere innerhalb des Testbereichs, basierend auf der Auswertung der Schnittstrukturen.

In einigen Weiterbildungen wird eine zentrale Gruppe von Schnittstrukturen, bei denen das Werkstück im scheibenartigen Bereich eine von mindestens einem Steg gehaltenen Scheibe aufweist, und auf jeder Seite der zentralen Gruppe eine Randgruppen von Schnittstrukturen, bei denen das Werkstück im scheibenartigen Bereich eine Öffnung im Werkstück aufweist, identifiziert, und es wird eine zentrale Position, die der zentralen Gruppe zugeordnet ist, oder eine zentrale Position zwischen den Randgruppen der Referenz-Fokuslage zugeordnet.

Beispielsweise werden Testschnitte in einem Zentralbereich, in dem die Referenz-Fokuslage zu erwarten ist, und Testschnitte auf beiden Seiten des Zentralbereichs durchgeführt. Zusätzlich oder alternativ unterscheiden sich die Testschnitt-spezifischen Fokuslagen um eine, insbesondere einstellbare, Schrittweite in Propagationsrichtung.

In einigen Ausführungsformen weist die Relativbewegungstrajektorie in dem mindestens einen Stegbereich zwei aneinander entlang verlaufende Liniensegmente auf, die durch einen vorgegebenen Abstand charakterisiert werden, und bei einer Positionierung des Werkstücks in der Referenz-Fokuslage liegen die erzeugten Schnittbreiten im Stegbereich im Bereich von 10 % bis 45 % des vorgegebenen Abstands.

Die Relativbewegungstrajektorie weist z.B. im scheibenförmigen Bereich eine nahezu geschlossene Ringform auf, die an ihren Enden in Liniensegmente des mindestens einen Stegbereichs übergeht. Ferner kann die Relativbewegungstrajektorie zwei im Wesentlichen spiegelsymmetrisch verlaufende Trajektorienabschnitte aufweisen, die in einem Zentralbereich als gegenüberliegende halbkreisartige Segmente geformt sind, zwischen denen der scheibenartige Bereich ausgebildet wird, und in Seitenbereichen, die an den Zentralbereich angrenzen und einander gegenüber liegen, als aneinander entlang verlaufende, beabstandete Liniensegmente geformt sind, die zwei Stegbereiche ausbilden. Dabei können sich die beabstandeten Liniensegmente unterschiedlich weit vom Zentralbereich weg erstrecken.

In einigen Ausführungsformen kann das Auswerten der Schnittstruktur ein Anfahren und Bestrahlen der scheibenartigen Bereiche sowie ein Detektieren von an der gehaltenen Scheibe reflektierter Strahlung und/oder durch die Öffnung im Werkstück tretender Strahlung umfassen. Ferner kann das Auswerten der Schnittstruktur ein optisches Aufnehmen eines Bildes des Werkstücks im Bereich der Sequenz von Testschnitten und eine Bildverarbeitung des Bildes zur Erkennung von gehaltenen Scheiben und/oder Öffnungen im Werkstück umfassen. Ferner kann die der Referenz-Fokuslage zugeordnete Fokuslage von einer Steuerung für die nachfolgende Bearbeitung, und insbesondere für die genaue Positionierung des Fokus auf der Oberfläche des Werkstücks, verwendet werden.

In einigen Ausführungsformen des Verfahrens ist die Werkzeugmaschine dazu ausgebildet, ein Werkstück in unterschiedlichen Positionen entlang der Propagationsrichtung des Strahls zu positionieren und den Strahl über das Werkstück zu führen.

In einem weiteren Aspekt weist eine Werkzeugmaschine eine Laserbearbeitungsanlage mit einem Lasersystem, eine Werkstückhalterung und einen Laserbearbeitungskopf auf. Der Laserbearbeitungskopf ist mit dem Lasersystem optisch verbunden und eine Relativbewegung zwischen dem Laserbearbeitungskopf und der Werkstückhalterung kann zur Führung eines Laserstrahls entlang einer Trajektorie über das Werkstück bewirkt werden. Ferner umfasst die Werkzeugmaschine eine Steuerungseinheit mit Zugriff auf eine hinterlegte Relativbewegungstrajektorie, wobei die Steuerungseinheit zur Durchführung eines wie zuvor beschriebenen Verfahrens zur Bestimmung einer Referenz-Fokuslage eines Strahls ausgebildet ist.

In einem Aspekt wird die Verwendung einer Kammblechgeometrie um eine Sequenz von scheibenförmige Schnittstrukturen erweitert. Die Sequenz von ausgeschnittenen bzw. noch im Wesentlichen verdeckten/geschlossenen Schnittstrukturen verdeutlicht, wo eine Referenz-Fokuslage liegt. Die Referenz-Fokuslage des Laserstrahls ist dabei beispielsweise diejenige Fokuslage, bei der der Strahlfokus auf der Werkstückoberfläche liegt, da hier die höchste Leistungsdichte herrscht und der schmalste Schnittspalt erzeugt wird. Ob eine Schnittstruktur zu einer ausgeschnittenen Öffnung oder "nur" zu einer fast geschlossenen Schnittlinie führt, hängt von der jeweilig vorliegenden Schnittspaltbreite ab, die sich in Abhängigkeit von der Fokuslage ändert. Das heißt, wird mit der Referenz-Fokuslage geschnitten, ist die Schnittspaltbreite minimal und die Schnittlinien der Schnittstruktur überlagern sich nicht (z.B. am Anfang und Ende einer baumförmigen Schnittstruktur). Mit zunehmender Entfernung von der Referenz-Fokuslage wird die Schnittlinie breiter, so dass es zu einer Überlagerung von Schnittlinienabschnitten kommt. Das Innere der Schnittlinie löst sich somit aus dem Blech und formt eine Öffnung. Mit anderen Worten, die Veränderung der Fokuslage hat ein Stehenbleiben oder ein Herausfallen der von der Schnittlinie bestimmten Form (z.B. einer Scheibenform) zur Folge. Über eine anschließende visuelle oder (teil-) automatisierte Symmetrieauswertung einer Sequenz von Schnittstrukturen mit unterschiedlichen Fokuslagen kann die Referenz-Fokuslage beispielsweise der Mitte der stehengebliebenen Scheiben zugeordnet werden.

In einigen Ausführungsformen werden bekannte Einschnitt-"Kammblechgeometrien" um eine Scheibenkontur erweitert.

In einigen Weiterbildungen kann eine automatisierte Auswertung einer geschnittenen Geometrie, z.B. eine Erkennung des Herausfallens einzelner Scheiben aus Schnittstrukturen, erfindungsgemäß über ein Kamerasystem erfolgen. Aufgrund der automatisierten Auswertung kann auf weitere (insbesondere manuell zu bedienende) Zusatzwerkzeuge verzichtet werden. Allgemein kann die Automatisierbarkeit der Fokuslagebestimmung eine schnellere Einrichtung der Werkzeugmaschine erlauben.

Die hierein beschriebenen Konzepte können reproduzierbare Ergebnisse liefern. Sie können auf einer einfachen Auswertung basieren, welche frei von subjektiven Einflüssen ist, die insbesondere bei der visuellen Auswertung von Kammblechverfahren nicht verhindert werden können. Sie können mit verschiedensten Lasertypen und Lasernennleistungen durchgeführt werden, die jeweils auf das zu schneidende Testwerkstück abzustimmen sind.

Die hierein beschriebenen Konzepte betreffen insbesondere die Bearbeitung von Bauteilen, bei denen mit einem Laserstrahl ein Werkstück z.B. geschnitten oder abgetragen wird. Die Umsetzung der hierein beschriebenen Konzepte kann zu einer Reduzierung der Fehlerwahrscheinlichkeit sowie einer Vereinfachung der Fokuslagebestimmung führen.

Hierin werden Konzepte offenbart, dies es erlauben, zumindest teilweise Aspekte aus dem Stand der Technik zu verbessern. Insbesondere ergeben sich weitere Merkmale und deren Zweckmäßigkeiten aus der folgenden Beschreibung von Ausführungsformen anhand der Figuren. Von den Figuren zeigen:
- Fig. 1: eine schematische räumliche Darstellung einer Werkzeugmaschine,
- Fig. 2: ein schematisches Flussdiagramm zur Verdeutlichung eines beispielhaften Ablaufs einer Fokuslageeinstellung,
- Fig. 3: eine schematische Darstellung eines ersten beispielhaften Verlaufs einer Schnittlinie in der Ebene eines planen Testwerkstücks,
- Fig. 4: eine schematische perspektivische Darstellung eines Laserschneidvorgangs zur Erzeugung der Schnittlinie aus Fig. 3 mit variierendem Abstand des Strahlausgangs eines Bearbeitungskopfs zum Testwerkstück,
- Fig. 5A-5C: schematische Darstellungen zur Verdeutlichung von offenen und geschlossenen Schnittlinien,
- Fig. 6: eine schematische Darstellung eines zweiten beispielhaften Verlaufs einer Schnittlinie in der Ebene mit variierendem Abstand des Strahlausgangs eines Bearbeitungskopfs zum Testwerkstück,
- Fig. 7: eine vergrößerte Darstellung einer Schnittstruktur der Schnittlinienverlaufs aus Fig. 6,
- Fig. 8: ein Foto eines Testblechs nach dem Testschnittschritt und dem Auswertungsschritt basierend auf einem Schnittlinienverlauf gemäß Fig. 7 und
- Fig. 9: eine schematische perspektivische Darstellung eines Auswertungsschritts zur Erkennung von offenen und geschlossenen Schnittstrukturen des Testschnittvorgangs aus Fig. 4.

Hierin beschriebene Aspekte basieren zum Teil auf der Erkenntnis, dass die Fokuslagenabhängige Schnittlinienbreite zum Schließen einer an sich nicht geschlossenen Schnittlinie verwendet werden kann.

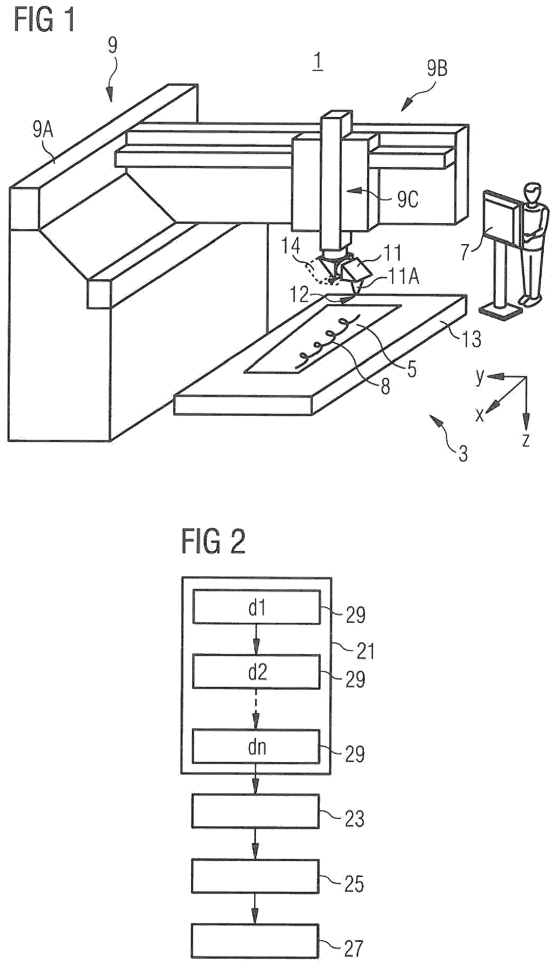

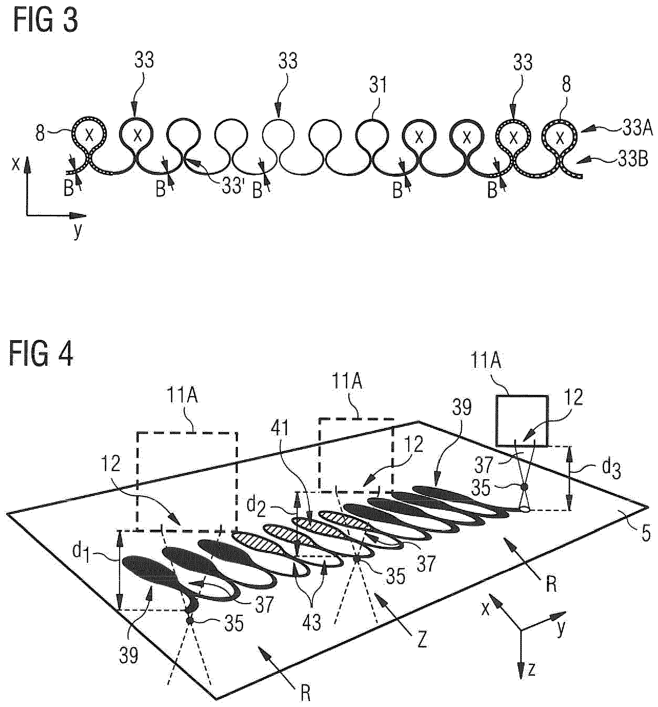

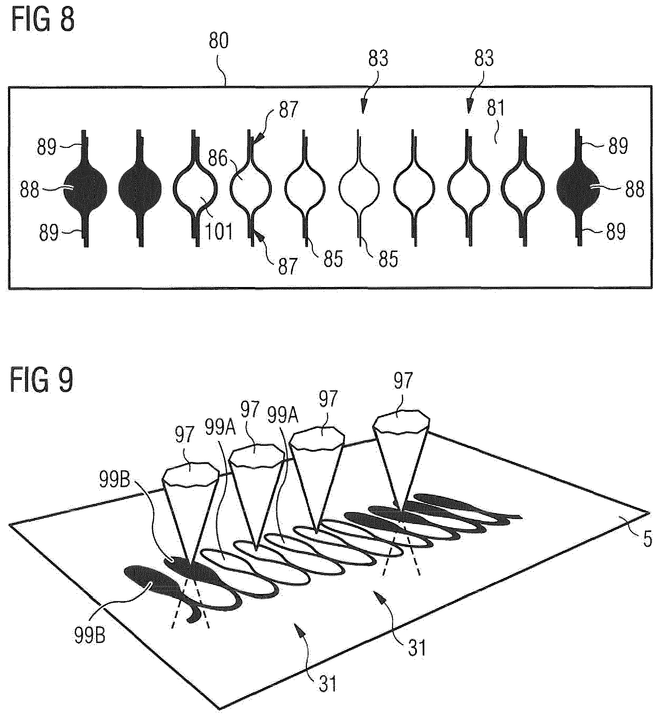

Im Folgenden wird in Verbindung mit Fig. 1 eine beispielhafte Werkzeugmaschine basierend auf einer Laserbearbeitungsanlage beschrieben, bei der das hierein offenbarte Konzept der Fokuslageeinstellung eingesetzt werden kann. Ein beispielhafter Ablauf der Fokuslageeinstellung wird in Verbindung mit dem Flussdiagramm der Fig. 2 erläutert. Anschließend werden unter Bezugnahme auf die schematischen Darstellungen der Figuren 3 bis 5 bzw. 6 und 7 zwei beispielhafte Schnittstrukturen erläutert. Fig. 8 zeigt abschließend einen Ausschnitt eines entsprechend bearbeiteten Testwerkstücks. In Verbindung mit Fig. 9 wird ein beispielhafter Abtastvorgang erläutert.

In Fig. 1 ist eine Werkzeugmaschine 1 mit einer Laserbearbeitungsanlage 3 als Grundmaschine für die Bearbeitung eines Werkstücks 5 dargestellt. Die Bedienung der Werkzeugmaschine 1 erfolgt über ein Bedienpult 7 eines Steuerungssystems (nicht explizit dargestellt). Beispielsweise können über die Erstellung und die Einstellung von NC-Programmen am Bedienpult 7 spezifische, auf Werkstücke und deren Bearbeitung abgestimmte Arbeitsabläufe vorgenommen werden. Diese können der Werkstückbearbeitung selbst sowie der Einstellung der Werkstückmaschine dienen. Beispielsweise weist die Werkzeugmaschine 1 einen Schaltschrank mit dem Steuerungssystem auf, in dem eine zugehörige CNC-Steuerung, eine elektrische Versorgung von Antrieben sowie allgemein Logik- und Leistungsteile vorgesehen sind.

Ein nicht explizit in Fig. 1 gezeigtes Lasergerät der Laserbearbeitungsanlage 3 dient der Erzeugung von Laserstrahlung und kann beispielsweise auf einem Festkörperlaser wie einem Scheibenlaser oder Faserlaser oder einem Gas-Laser wie einem CO2-Laser basieren. Über Laserlichtkabel und/oder Spiegel kann die Strahlführung vom Lasergerät zum Werkstück erfolgen. Weitere Komponenten der Werkzeugmaschine 1 umfassen beispielsweise einen Rotationswechsler zum Halten des zu bearbeitenden Werkstücks 5 und zum leichten Entnehmen von bearbeiteten Werkstücken, einen Kompaktentstauber zur Absaugung von Rauchgasen und Schwebeteilchen aus dem Innenraum, einen Schrottförderer sowie Elemente für die Pneumatik, für die Schneid- und Schweißgasversorgung sowie für die Zentralschmierung.

Ein durch die CNC-Steuerung kontrollierter Arbeitsablauf erlaubt die Bearbeitung des Werkstücks 5 auf eine vorbestimmte Art und Weise unter Zusammenwirken der verschiedensten Komponenten der Laserbearbeitungsanlage 3. So kann nacheinander ein Arbeitsablauf wiederholt durchgeführt und eine große Anzahl von Werkstücken kann effizient und im Wesentlichen gleich - trotz eventueller Variation in den Maßen aufgrund von Toleranzbereichen - bearbeitet werden.

Ein Programmierer erstellt das NC-Programm zur jeweiligen Bearbeitung innerhalb eines Programmiersystems am Computer, d.h. beispielsweise am Bedienpult 7 des Steuerungssystems. Den Weg des Lasers, definiert durch eine Relativbewegungstrajektorie 8 (schematisch in Fig. 1 angedeutet) zwischen Laserstrahl und Werkstück, kann das Steuerungssystem automatisch oder unter Einflussnahme des Bedieners berechnen. Bei der Bearbeitung ergibt sich z.B. bei einem Laserschneidvorgang aus dem Strahldurchmesser am Werkstück und der Relativbewegungstrajektorie 8 der Spaltverlauf und die Spaltbreite des Schnittes. Das Steuerungssystem kann die Bearbeitungsfolge festsetzen, Anfangsschnittpunkte an die richtigen Stellen setzen, spitze Ecken abrunden lassen oder Besäumschnitte vorsehen. Dabei kann das Steuerungssystem die Strategien umsetzen, die der Programmierer werkstückspezifisch ausgewählt hat. In einer vorbereitenden Simulation kann der Programmierer sehen, wie das NC-Programm abgearbeitet wird.

Damit die Schnittqualität stimmt, liefert das NC-Programm der Steuerung die passenden Werte für Bearbeitungsparameter wie Schneidgeschwindigkeit, Laserleistung, Düsenabstand und Fokuslage. Diese Werte stehen in so genannten Technologietabellen, auf die die Steuerung zugreifen kann. Ferner umfassen die Bearbeitungsparameter werkstückspezifische Parameter wie Toleranzgrenzen von (z.B. Blech-) Kanten und maximal mögliche Bewegungsgeschwindigkeiten des Bearbeitungskopfes relativ zum Werkstück und/oder die Geschwindigkeit bei der Abstandsanpassung.

Fig. 1 zeigt ferner schematisch den Aufbau der Laserbearbeitungsanlage 3, welche sich beispielsweise im Innenraum einer Schutzkabine befindet. Die Laserbearbeitungsanlage 3 weist eine Bewegungseinheit 9 mit funktionsrelevanten Bauteilen wie x-, y- und z-Schlitten 9A, 9B, 9C zur Bewegung von Strahlführungs- und Medienzuführungskomponenten relativ zum Werkstück 5, z.B. gemäß der vom Steuerungssystem bereitgestellten Relativbewegungstrajektorie 8, auf.

Allgemein können die Strahlführungskomponenten Laserlichtkabel, eine z-Pinole, eine Kollimationsoptik und eine Bearbeitungsoptik zum Leiten und Fokussieren des Laserstrahls auf das Werkstück 5 umfassen. Die Bearbeitungsoptik ist üblicherweise in einem Bearbeitungskopf 11 mit einer Düse 11A mit einem Strahlausgang 12 vorgesehen. Der Bearbeitungskopf 11 kann, beispielsweise durch weitere Dreh- und Schwenkachsen, im Wesentlichen frei im Raum positioniert und ausgerichtet werden und so den austretenden Laserstrahl gezielt über das Werkstück 5 führen. Weitere, insbesondere redundante, Achsen können ein schnelles Einstellen der Position und Ausrichtung des Bearbeitungskopfes 11 zum Werkstück 5 verbessern. Der Bearbeitungskopf 11 - im Fall des Laserschneidens auch als Schneidkopf bezeichnet - macht den Laserstrahl mit Linsen- oder Spiegel-basierten einstellbaren Fokussieroptiken zum Schneidwerkzeug. Der Abstand der Düse 11A zum Werkstück und/oder die Fokussieroptik des Bearbeitungskopfs 11 können so eingestellt werden, dass der Strahlfokus des Laserstrahls z.B. auf der Oberfläche des Werkstücks 5 liegt. Mit dieser Information (dem Abstand bzw. der Einstellung der Fokussierungseinrichtung, bei dem bzw. bei der der Strahlfokus auf der Oberfläche des Werkstücks 5 liegt) kann bei der späteren Werkstückbearbeitung eine gewünschte Fokuslage eingestellt werden. Der Laserstrahl tritt über die Düse 11A beispielsweise zusammen mit einem Schneidgas aus dem Bearbeitungskopf 11 aus. Der Abstand zum Werkstück 5 kann für die Bearbeitung des Werkstücks 5 z.B. im Bereich von 0,5 mm bis 2 mm, beispielsweise im Bereich von 0,7 mm bis 1,2 mm, liegen.

In der beispielhaften Ausführung der Bewegungseinheit kann der Bearbeitungskopf 11 in einem durch die x-, y- und z-Schlitten 9A, 9B, 9C sowie durch die Beweglichkeit der z-Pinole bestimmten Bereich jede einstellbare Position und Orientierung einnehmen. Den x-, y- und z-Schlitten 9A, 9B, 9C sind Antriebseinheiten zugeordnet, die es erlauben, eine Relativbewegung des Bearbeitungskopfs 11 bezüglich des Werkstücks 5 durchzuführen. Die Ausrichtung des Bearbeitungskopfes 11 zum Werkstück 5 erfolgt durch die Dreh- und Schwenkachsen. Daraus ergibt sich ein Arbeitsraum, der alle Punkte umfasst, die durch den entsprechend fokussierten, austretenden Laserstrahl bearbeitbar sind.

Das Werkstück 5 kann mit einer Spanntechnik (nicht gezeigt) ortsfest auf einer Werkstücklagerungsvorrichtung 13 gelagert sein. In alternativen Ausführungsformen ist auch das Werkstück 5/die Werkstücklagerungsvorrichtung 13 oder nur das Werkstück 5/die Werkstücklagerungsvorrichtung 13 im Raum bewegbar. Die hierein vorgenommenen Konzepte sind entsprechend angepasst auch in derartigen Konfigurationen einsetzbar.

Zur Werkstücklagerungsvorrichtung 13 gehören in der Regel weitere Elemente wie Spanner zum Einspannen des Werkstücks 5 sowie Sensoren für die Bauteilerkennung und Antriebe zum Verfahren/Bewegen der Werkstücklagerungsvorrichtung 13.

Allgemein sind umgeformte Blechteile ein Beispiel für ein dreidimensional, variabel geformtes Werkstück 5. Das in Fig. 1 gezeigte Werkstück 5 ist beispielsweise ein Testwerkstück, das speziell zur Fokuslagebestimmung verwendet wird. Beispielhaft ist die Relativbewegungstrajektorie 8 angedeutet, entlang welcher der Laserstrahl über das Werkstück 5 zur Fokuslagebestimmung geführt wird. In einigen Anwendungen kann das Werkstück 5 alternativ ein nicht für das zu erzeugende Produkt benötigter Bereich des Werkstücks sein. Typische Werkstücke sind aus einem Metall, wie z.B. Stahl, Aluminium oder Kupfer, oder einer Metalllegierung. Ebenso sind aber auch Funktionskeramiken, Kunststoffe, organische Werkstoffe oder andere Werkstoffe möglich.

In beispielhaften Schneidvorgängen kann beim Laserschneiden mit dem Laserstrahl das Werkstück 5 mit einem Trennschnitt bearbeitet werden, d.h. die Laserparameter, insbesondere die Laserleistung, sind derart eingestellt, dass das Werkstück 5 in zwei voneinander durch eine entlang der Bewegungstrajektorie 8 verlaufende Schnittlinie getrennte Bereiche geteilt wird. Dazu wird z.B. bei aktiviertem Laserstrahl der Bearbeitungskopf 11 von oben auf das Werkstück 5 zubewegt, um dadurch in das Werkstück 5 einzustechen. Anschließend erfolgt die Relativbewegung entlang der Relativbewegungstrajektorie 8, indem der Laserstrahl/der Bearbeitungskopf 11 und das Werkstück 5 relativ zueinander bewegt werden, sodass ein durchgängiger Schnittspalt im Werkstück erzeugt werden kann.

Entscheidend für einen sauberen Schnitt ist insbesondere die Fokuslage zum Werkstück 5 bzw. die genaue Kenntnis der Fokuslage für eine korrekte Ansteuerung der Relativbewegungstrajektorie 8. So muss beim Schneiden der Abstand zwischen Schneiddüse 11A und Werkstück 5 möglichst genau auf einen Sollwert (hierin auch als Arbeitsabstand bezeichnet) geregelt werden, damit der Fokus während des Schneides durchgehend optimal bezüglich der Materialoberfläche liegt und das Schneidgas z.B. optimal in den Schnittspalt strömen kann. Die Einstellung der Fokuslage durch die Fokussieroptik erfolgt in Abhängigkeit des gewählten Düsenabstands. Da schon geringe Abweichungen im Abstand das Schneidergebnis beeinflussen können, wird der Arbeitsabstand, also der Abstand zwischen der Schneiddüse 11A und dem Werkstück 5, üblicherweise durch eine aktive Sensorik überwacht und kontinuierlich nachgeregelt. Die Sensorik misst dazu allgemein den Abstand zwischen Schneiddüse 11A und Werkstück 5 fortlaufend. Der vorzunehmende Arbeitsabstand kann in Abhängigkeit der jeweiligen Bearbeitungsverfahren und Lasersysteme variieren. Z.B. erfordert Schmelzschneiden einen geringen Abstand im Millimeterbereich, um beispielsweise das Schneidgas in den Schnittspalt einströmen zu lassen.

Die Fokuslage kann im Verhältnis zur Oberfläche des Werkstücks 5 verändert werden, indem die Fokussieroptik verstellt wird und/oder der Abstand der Düse 11A (d.h. des Bearbeitungskopfes 11) zum Werkstück 5 verändert wird. Ist die Fokuslage über dem Werkstück, so entsteht im Werkstück eine Öffnung, die sich nach unten erweitert. Liegt die Fokuslage unter dem Werkstück, entsteht eine Öffnung, die sich nach oben erweitert. Liegt die Fokuslage auf (oder nahe) der Oberfläche des Werkstücks, so entsteht eine Öffnung mit im Wesentlichen parallelen Seitenwänden. Bei der Werkstückbearbeitung liegt der Fokus des Laserstrahls beispielsweise auf der Oberseite des Werkstücks oder innerhalb des Werkstücks.

Die Referenz-Fokuslage des Laserstrahls ist beispielsweise diejenige Fokuslage, bei der der Strahlfokus im Wesentlichen auf (oder nahe) der Werkstückoberfläche liegt. Bei dieser Fokuslage wird üblicherweise der schmalste Schnittspalt im Werkstück 5 erzielt, da hier die höchste Leistungsdichte auf der Werkstückoberfläche vorliegt. Der Abstand der Düse 11A zu der Oberfläche des Werkstücks 5 und/oder die Fokussieroptik des Bearbeitungskopfs 11 sind dann z.B. so eingestellt, dass der Strahlfokus des Laserstrahls auf der Oberfläche des Werkstücks 5 liegt.

Die nachfolgend beschriebene Fokuslagebestimmung wird beispielhaft anhand des planen Werkstücks 5, z.B. eine Blechplatte, beschrieben. Sie kann jedoch allgemein auch an nichtplanen Werkstücken erfolgen.

Für einige Ausführungsformen der Fokuslagebestimmung kann die Laserbearbeitungsanlage 3 ferner eine Kamera 14 zur Auswertung eines Testschnittvorgangs aufweisen. In Fig. 1 ist die Kamera 14 beispielsweise am Bearbeitungskopf 11 vorgesehen. Die Kamera 14 ist üblicherweise Teil der Steuerungseinheit der Laserbearbeitungsanlage 3.

Dem nachfolgend beschriebenen Testschnittvorgang geht üblicherweise ein Positionier-und/oder Anschneidvorgang voraus. Ziel dieses Positionier- und/oder Anschneidvorgangs ist es unter anderem sicherzustellen, dass der Bearbeitungskopf 11 ab der mit einer Startposition verknüpften Bearbeitungsposition im vorbestimmten Abstand eine spezifische Schnittkontur in das Werkstück 5 schneiden kann. Der Positionier- und/oder Anschneidvorgang wird nachfolgend vorausgesetzt und kann ein oder mehrmals, beispielsweise für räumlich getrennte Schnittsegmente, erfolgen.

Das in Fig. 2 gezeigt Flussdiagramm illustriert allgemein das Vorgehen bei der Fokuslagebestimmung, wie sie nachfolgend beispielhaft für zwei beispielhafte Typen von Schnittstrukturen erläutert wird. Das Vorgehen umfasst einen Testschnittschritt 21, einem Auswerteschritt 23 des Testschnittschritts 21, einem Zuordnungsschritt 25 der Ist-Fokuslage anhand dem Auswerteergebnis und einen Einstellschritt 27 der Fokuslage für die sich anschließende Werkstückbearbeitung.

In Fig. 2 wird verdeutlicht, dass der Testschnittschritt 21 eine Sequenz von Schnittstrukturen 29 betrifft. Die Schnittstrukturen 29 werden bei unterschiedlichen Fokuslagen entlang der Propagationsrichtung des Laserstrahls bzgl. des Werkstücks 5 durchgeführt. In der Fig. 1 entsprechen unterschiedliche Fokuslagen unter Annahme eines in der x-y-Ebenen planen Testwerkstücks einer Lageänderung des Fokus in z-Richtung.

Die Fokuslage bzgl. des Werkstücks 5 ist allgemein durch die optische Weglänge des vom Laserstrahl durchlaufenen Strahlengangs bis zum Werkstück 5 bestimmt. Wird eine unveränderte Weglänge bis zum Strahlausgang 12 der Düse 11A vorausgesetzt, ist die Fokusposition bzgl. des Werkstücks 5 durch den Abstand d1, d2 bis dn des Werkstücks 5 zum Strahlausgang 12 der Düse 11A definiert. Alternativ oder zusätzlich kann die Fokuslage bzgl. des Werkstücks 5 durch die Position eines verschiebbaren optischen Elements, beispielsweise eines Spiegels, im Strahlengang definiert werden. In der nachfolgenden Beschreibung stehen die Abstände d1, d2 bis dn des Werkstücks 5 zum Strahlausgang 12 beispielhaft für die Einstellbarkeit der Fokuslage in z-Richtung. Der Fachmann wird erkennen, dass sich bei entsprechend anderweitiger Einstellbarkeit der optischen Weglänge die hierin offenbarten Konzepte entsprechend übertragen lassen.

An den Testschnittschritt schließen sich ein Auswerteschritt 23, ein Zuordnungsschritt 25, sowie ein Einstellschritt 27 an. Im Auswerteschritt 23 wird zunächst die Sequenz von Schnittstrukturen 29 auf ein Schnittergebnis untersucht. Im Zuordnungsschritt 25 wird dann eine Schnittstruktur der Referenz-Fokuslage zugeordnet, womit dann im Einstellschritt 27 die Referenz-Fokuslage in der Steuerung der Bearbeitungsmaschine eingestellt wird.

Die Fig. 3 zeigt schematisch einen Schnittverlauf 31 eines Trennschnitts, wie er sich ergeben würde, wenn gemäß einer Relativbewegungstrajektorie, die eine Sequenz von beispielsweise identischen baumförmigen Schnittstrukturen 33 umfasst, ein Werkstück zertrennt wird. In der ersten und den beiden letzten Schnittstrukturen 33 ist beispielhaft die dem Schnittverlauf zugrundeliegende Relativbewegungstrajektorie 8 weiß gestrichelt angedeutet. Dabei wurde bei jeder neuen Schnittstruktur 33 eine um eine feste Schrittweite geänderte Fokuslage eingenommen. In Fig. 1 würde dies einer um eine Schrittweite Δz geänderten Relativposition der Fokuslage bezüglich des plattenförmigen Werkstücks 5 entsprechen.

Im Schnittverlauf 31 der Fig. 3 wurde die Fokuslage des Laserstrahls durch das Werkstück 5 hindurchbewegt, da eine Schnittbreite B des Trennschnitts von links nach rechts erst abnimmt und dann wieder zunimmt.

Die als baumförmig beschriebenen Schnittstrukturen 33 basieren auf einer Relativbewegungstrajektorie 8, die einen Kronenbereich 33A und einen Stammbereich 33B aufweist. Im Stammbereich 33B sind die aneinander vorbeilaufenden Abschnitte der Relativbewegungstrajektorie 8 derart voneinander beabstandet, dass die Relativbewegungstrajektorie 8 eine Sequenz von fast vollständig ausgeschnittenen Scheibenkonturen ergibt. Jede der Scheibenkonturen ist über einen Steg 33' mit dem Restmaterial des Werkstücks 5 verbunden.

Bei den in Fig. 3 mit "x" gekennzeichneten Schnittstrukturen 33 überlappen sich im Stammbereich 33B die erzeugten Schnitte aufgrund der Breite B des Trennschnitts, so dass ausgeschnittene Scheiben herausfallen können. Dieses Herausfallen kann z.B. visuell oder mit der Kamera 14 im Auswerteschritt 23 detektiert werden. Alternativ oder zusätzlich kann das bereits eingangs erwähnte, aus der DE 10 2011 004 117 A1 bekannte Verfahren zur Kontrolle des Schneidvorgangs eingesetzt werden. Liegt der Fokus im Bereich des Werkstücks 5, ist die Breite B des jeweiligen Trennschnitts nicht groß genug, um den durch die Relativbewegungstrajektorie 8 definierten Steg 33' vollkommen wegzunehmen, so dass die Scheiben am Werkstück 5 befestigt bleiben.

Fig. 4 verdeutlicht den Testschnittschritt der Fig. 3 in einer perspektivischen Ansicht. Schematisch ist die Düse 11A an drei Positionen einer Sequenz von Testschnitten angedeutet. Ein zugeordneter Laserstrahlfokus 35 eines Laserstrahls 37 sowie die zugeordneten Abstände d1, d2, d3 zwischen Strahlausgang 12 und der Oberfläche des Werkstücks 5 zeigen, wie sich der Laserstrahlfokus 35 erst unterhalb des Werkstücks 5 (geringster Abstand d1), dann auf, bzw. in der Nähe der Oberfläche des Werkstücks (Abstand d2>d1) und abschließend oberhalb des Werkstücks 5 (größter Abstand d3>d2) befindet. Jeder der Abstände d1, d2, d3 definiert eine für die jeweilige in einem Testschnitt durchgeführte Schnittstruktur 33 spezifische, sich entlang der Propagationsrichtung des Laserstrahls erstreckende Fokuslage 35 des Laserstrahls 37. Die nebeneinander liegenden Schnittstrukturen 33 definieren einen Testbereich von Fokuslagen 35. Der Testbereich umfasst einen Zentralbereich, in dem die Referenz-Fokuslage zu erwarten ist. Die Testschnitte werden auf beiden Seiten des Zentralbereichs und im Zentralbereich durchgeführt. Dabei unterscheiden sich die Testschnitte beispielsweise um eine, insbesondere einstellbare, Schrittweite in Propagationsrichtung, d.h. die Testschnitte werden mit unterschiedlich eingestellter Fokuslage erzeugt.

Da bei den in Fig. 3 mit "x" gekennzeichneten Schnittstrukturen 33 die innere Platte herausgefallen ist (schwarze ausgeschnittene Öffnungen 39 in Fig. 4), erkennt man nur noch bei den fünf mittleren Schnittstrukturen 33, dass Materialscheiben 41 (in Fig. 4 gestrichelt hervorgehoben) des Werkstücks 5 noch im Inneren der entsprechenden Kronenbereiche 33A vorhanden und über dünne Stege 43 mit dem einen Umgebungsbereich 44 bildenden Restmaterial des Werkstücks 5 verbunden sind.

Die fünf mittleren Schnittstrukturen 33 bilden eine zentrale Gruppe Z von aufeinanderfolgenden Schnittstrukturen, bei denen das Werkstück im scheibenartigen Bereich eine von mindestens einem Stegbereich gehaltene Scheibe aufweist. Die mit "x" gekennzeichneten Schnittstrukturen 33 bilden auf jeder Seite der zentralen Gruppe Z jeweils eine Randgruppe R von insbesondere aufeinanderfolgenden Positionen von Schnittstrukturen, bei denen das Werkstück im scheibenartigen Bereich eine Öffnung im Werkstück aufweist.

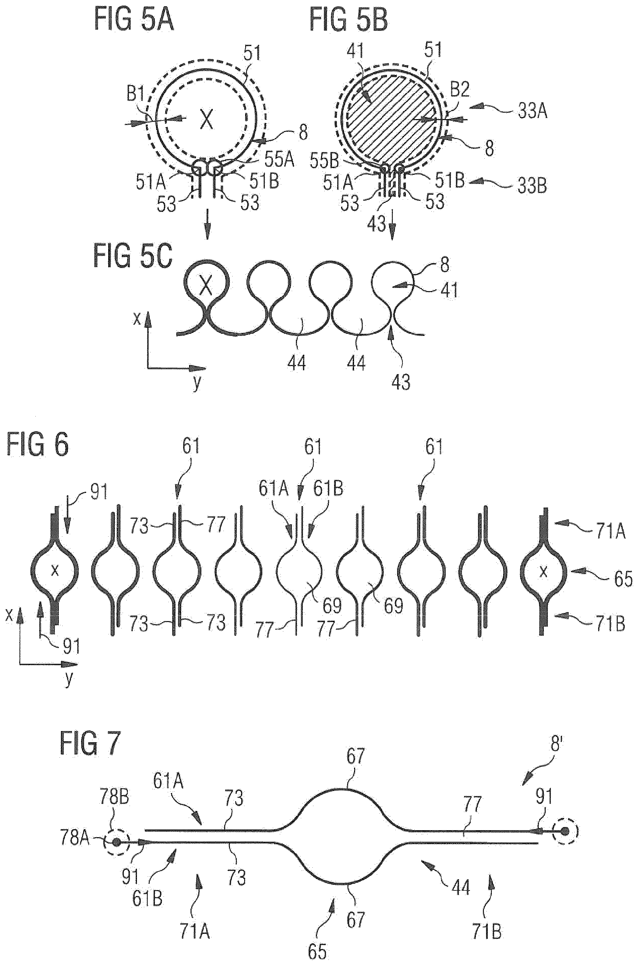

Die Fig. 5A bis 5C verdeutlichen für den in den Figuren 3 und 4 gezeigten Testschnittschritt den Zusammenhang zwischen der Relativbewegungstrajektorie 8 und dem sich ergebenden Trennschnitt für den Fall, dass der Schnitt im Bereich der Referenz-Fokuslage 35 (Fig. 5B) bzw. von der Referenz-Fokuslage 35 beabstandet (Fig. 5A) erfolgt.

Im Kronenbereich 33A bildet die Relativbewegungstrajektorie 8 beispielsweise einen fast geschlossenen Kreis, d.h. ein Kreissegment 51 von z.B. ca. 350°. Anfangspunkt 51A und Endpunkt 51B sind mit linearen, zueinander parallel (allgemein aneinander entlang) verlaufenden und voneinander beabstandeten Liniensegmenten 53 verbunden, die dem Stammbereich 33B entsprechen. Die in Fig. 5C (wie in den Figuren 3 und 4) umgesetzte Relativbewegungstrajektorie 8 wurde für eine gleichmäßige Bewegung abgerundet. Sie weist aber im Wesentlichen die gleichen Merkmale auf, einen fast geschlossenen kreissegmentartigen Verlauf im Kronenbereich 33A und zumindest einen abschnittsweise parallelen Verlauf im Stammbereich 33B.

Im Übergangsbereich zwischen Kronenbereich 33A und Stammbereich 33B sind in den Fig. 5A und 5B beispielhafte Strahldurchmesser 55A, 55B angedeutet, die die jeweiligen Breiten B1, B2 des Schnittspalts (Ränder gestrichelt entlang der Relativbewegungstrajektorie 8 angedeutet) bestimmen. Ab einer gewissen Mindestbreite bleibt kein Steg mehr stehen (oder dieser ist so instabil, dass er die Scheibe nicht mehr halten kann), und die Scheibe wurde durch den Trennschnitt herausgelöst. Für die Breite B1 in Fig. 5A erkennt man, dass sich die Strahldurchmesser 55A überlagern, d.h., es bildet sich kein Steg aus. Für die kleinere Breite B2 in Fig. 5B überlagern sich die (kleineren) Strahldurchmesser 55B nicht und die Scheibe 41 wird durch den Steg 43 gehalten.

Da der programmierte Steg der Relativbewegungstrajektorie 8 eine immer gleiche Breite aufweist, führt im Idealfall die Zunahme der Schnittspaltbreite zur Zerstörung des Stegs, so dass die Scheibe herausfällt (links in Fig. 5C). Dabei ist (je nach Schnittspaltbreite) die Stabilität der Kontur nur durch den einseitig verbleibenden, aber sehr filigranen, Steg 43 gewährleistet. Der einzelne Steg 43 kann in Hinblick auf einen automatisierten sowie robusten Auswerteschritt zu Fehlern führen, wenn z.B. ein Steg 43 zwar im Prinzip stehen bleibt, aber der Steg nicht stark genug ist, die Scheibe 41 zu halten. So können in einigen Konstellationen die baumförmigen Schnittstrukturen 33 eine zu hohe Instabilität aufweisen.

Insbesondere kann ferner bei einem insbesondere mittels Laserstrahlabtasten durchgeführten Auswertungsschritt z.B. aufgrund der Einwirkung des strömenden Schneidgases der Steg umgebogen werden, wodurch das Ergebnis verfälscht wird.

Das Vorsehen eines zweiten Stegs durch eine modifizierte Relativbewegungstrajektorie (oder allgemein das Vorsehen von mehreren Stegen) kann der Scheibe den notwendigen Halt bieten. Dadurch kann ein weniger fehleranfälliger Auswertungsschritt möglich werden. Eine beispielhafte Umsetzung wird anhand der Figuren 6 bis 8 verdeutlicht.

Die Figuren 6 und 7 zeigen beispielhafte Schnittstrukturen 61, die mit unterschiedlichen Fokuslagen geschnitten wurden (Fig. 6), bzw. einen Abschnitt der Relativbewegungstrajektorie 8' zur Erzeugung einer Schnittstruktur 61 (Fig. 7). Die Schnittstrukturen 61 wurden mit zwei im Wesentlichen spiegelsymmetrisch verlaufenden Trajektorienabschnitten 61A, 61B erzeugt. In einem Zentralbereich 65 sind diese als gegenüberliegende halbkreisartige Segmente 67 geformt, zwischen denen ein scheibenartiger Bereich 69 ausgebildet wird. Auf angrenzenden und einander gegenüberliegenden Seitenbereichen 71A, 71B setzen sich die halbkreisartigen Segmente 67 als im Wesentlichen parallel verlaufende, beabstandete Liniensegmente 73 fort. Allgemein kann den Liniensegmenten 73 ein vorgegebener Abstand zugeordnet werden. Entsprechend können sich - in Abhängigkeit der Schnittbreite - an gegenüberliegenden Seiten einer ausgeschnittenen Scheibe jeweils (filigrane) Stegstrukturen 77 ausbilden. Die minimale Breite eines Stegs 77 ergibt sich aus der Differenz des vorgegebenen Abstands der Liniensegmente 73 und der Schnittbreite.

Wird die Schnittbreite zu groß, sind die Stege zu schwach oder sie werden gar nicht mehr ausgebildet, so dass die Scheiben ausgeschnitten werden und herausfallen. Zur Verdeutlichung sind in Fig. 7 ein Fokusdurchmesser 78A (d.h. der Laserstrahldurchmesser bei Referenz-Fokuslage) und ein Strahldurchmesser 78B entfernt von der Referenz-Fokuslage an den Einstichpunkten (Laser-Einschalt-Punkten) angedeutet. Für die Messung werden beispielsweise bei einer Positionierung des Werkstücks 5 in der Position der Referenz-Fokuslage Schnittbreiten im Stegbereich erzeugt, die im Bereich von z.B. 10 % bis 45 % des vorgegebenen Abstands liegen. Allgemein ist der vorgegebene Abstand so gewählt, dass bei der Referenz-Fokuslage, d.h. bei der Position, in der die Fokuslage im/am Werkstück optimal ausgerichtet ist, eine ausreichend stabile Stegstruktur gebildet wird.

Bei den in Fig. 6 mit "x" gekennzeichneten Schnittstrukturen 61 überlappen sich z.B. im Zentralbereich 65 die erzeugten Trennschnitte aufgrund der Breite des Trennschnitts, so dass die Scheiben herausfallen können. Bei den sich dazwischen befindenden Schnittstrukturen 61 werden dagegen die Scheiben 69 durch die gegenüberliegenden Stege 77 gehalten.

In Fig. 8 wird ein Bild 80 einer Testplatte 81 gezeigt, bei der eine Fokuslagebestimmung durchgeführt wurde. Man erkennt in der Testplatte 81 bei mittleren Schnittstrukturen 83 nur unterschiedlich breite Schnittlinien 85 (schwarz) in der Form gemäß Fig. 7, so dass jeweils eine Scheibe 86 über zwei Stege 87 gehalten wird. Dagegen sind auf der linken Seite zwei (schwarze) Löcher 88 und auf der rechten Seite ein (schwarzes) Loch 88 zu erkennen, wobei sich die (schwarzen) Ausschnitte/Löcher 88 an gegenüberliegenden Seiten als lineare Einschnitte 89 mit unterschiedlichen Breiten fortsetzen.

Wie in Fig. 7 ferner verdeutlicht wird, erlauben es die geraden Liniensegmente 73, im Bereich des Einstichs in das Werkstück 5 nur ein Liniensegment vorzusehen. Dazu werden die paarweisen Liniensegmente in entgegengesetzter Richtung angefahren (in den Figuren 5 und 6 sind Pfeile 91 in "+x"-Richtung bzw. "-x"-Richtung angedeutet) und ein Einstechen, d.h. der Beginn eines jeden Trennschnitts, erfolgt in einem größeren Abstand von der Scheibe 69 (z.B. dem Scheibenzentrum) als das Beenden des anderen Trennschnitts (z.B. durch Laserausschalten). Dadurch kann verhindert werden, dass ein beim Einstechen erzeugtes Einstichloch 93, dessen Durchmesser über die Breite des Trennschnitts hinausgehen kann, nicht zu einem unerwünschten Herausfallen der Scheibe führt, obwohl scheibennah Stegstrukturen ausgebildet wurden.

Beispiele für die Bemaßung des in Fig. 7 gezeigten Trajektorienabschnitts 8' sind ein Krümmungsradius im Zentralbereich 65 im Bereich von 1 mm bis 3 mm, z.B. 1,5 mm, eine Länge der Liniensegmente 73 z.B. im Bereich von 3 mm bis 10 mm, wobei die Länge des vom Einstichloch 93 ausgehenden Liniensegments etwas größer ist (z.B. 1 mm bis 3 mm größer). Ferner kann der Übergang von den Seitenbereichen 71A, 71B zum Zentralbereich 65 mit einem Radius im Bereich von 1 mm bis 3 mm geglättet werden.

Fig. 9 verdeutlicht beispielhaft für die baumartige Schnittstruktur 31 einen Auswerteschritt 23, der auf einem Abtasten der einzelnen Schnittstrukturen 31 mit einem Laserstrahl 97 basiert. Mit Hilfe des Lasers wird erkannt, ob eine Scheibe 99A noch durch in diesem Fall einen einzigen Steg gehalten wird oder ob die Scheibe vollkommen ausgeschnitten wurde und somit herausgefallen ist, wodurch sich ein Öffnung 99B im Werkstück 5 bildet.

Dazu wird die Düse 11A beispielsweise zentral über der Mitte einer jeden Schnittstruktur 31 positioniert und der Laserstrahl 97 eingeschaltet. Trifft der Laserstrahl 97 auf die noch gehaltene Scheibe 99A, wird der Laserstrahl 97 reflektiert. Das reflektierte Licht kann detektiert werden. Liegt dagegen eine Öffnung 99B vor, tritt der Laserstrahl 97 durch das Werkstück 5 hindurch und es findet keine Reflektion statt, d.h. es wird kein reflektiertes Licht detektiert. Das in Fig. 8 gezeigte Testwerkstück 81 zeigt beispielsweise Auftreffpunkte 101 des Laserstrahls auf den stehengebliebenen Scheiben. Alternativ oder ergänzend kann das Licht detektiert werden, das eine Öffnung durchtreten hat.

Auf diese Weise kann der Sequenz von Schnittstrukturen 31 eine Messwertreihe zugeordnet werden, die die Schnittbreite und damit die Fokuslage berücksichtigt. Beispielsweise kann Öffnungen der Wert "0" und der gehaltenen Scheibe der Wert "1" zugeordnet werden (Auswerteschritt 23 in Fig. 2). Entsprechend ergibt sich für Fig. 9 als Auswerteergebnis des Auswerteschritts die Messwertreihe: 0 - 0 - 1 - 1 - 1 - 1 - 1 - 0 - 0 - 0 - 0. Dabei wurde zwischen jedem Messwert die Fokuslage um eine beispielsweise feste Schrittweite in Ausbreitungsrichtung (z.B. in Fig. 1 in z-Richtung) bewegt.

Alternativ zur automatisierten Auswertung der Schnittstrukturen 31, kann auch ein Bediener manuell die Auswertung der Schnittstrukturen 31 übernehmen. Alternativ oder ergänzend kann die Sequenz von Schnittstrukturen beispielsweise auch durch Bilderkennung eines von der Kamera 14 aufgenommenen Bildes ausgewertet werden und den einzelnen Schnittstrukturen 31 können entsprechende Messwerte zugeordnet werden.

Wird eine symmetrische Spaltverbreiterung bei Abweichung von der Referenz-Fokuslage angenommen, kann die Referenz-Fokuslage der Mitte zwischen den Öffnungsmesswerten "0" zugeordnet werden (Zuordnungsschritt 25 in Fig. 2). In der Beispielmessung der Fig. 9 liegt die Referenz-Fokuslage entsprechend bei dem mittleren der Scheibenmesswerte "1" im Werkstück 5.

Bei einer geraden Anzahl an Scheibenmesswerten "1" kann die Referenz-Fokuslage als zwischen den mittleren Scheibenmesswerten liegend angenommen werden und entsprechend mithilfe der Schrittweite interpoliert werden. Die Referenz-Fokuslage wird in der Steuerung abgelegt und für die nachfolgende Bearbeitung und insbesondere die genaue Positionierung des Fokus auf bzw. im Werkstück verwendet (Einstellschritt 27 in Fig. 2).

## Patentansprüche

1. Verfahren zur Bestimmung einer Referenz-Fokuslage (35) eines Strahls einer strahlbasierten Werkzeugmaschine, unter Verwendung einer Steuerungseinheit, **dadurch gekennzeichnet, dass** die Steuerungseinheit folgende Schritte durchführt:
Bereitstellen einer Relativbewegungstrajektorie (8, 8'), die einen scheibenartigen Bereich (69) hinsichtlich eines Umgebungsbereichs (44) abgrenzt, wobei der scheibenartige Bereich (69) über mindestens einen Stegbereich (77) mit dem Umgebungsbereich (44) verbunden ist,
Durchführen (Schritt 21) einer Sequenz von Testschnitten an einem Werkstück (5), wobei bei jedem Testschnitt im Werkstück (5) eine Schnittstruktur (31, 61) durch Führen des Strahls (37) entlang der Relativbewegungstrajektorie (8, 8') geschnitten wird und das Schneiden entlang des mindestens einen Stegbereichs (77) der Relativbewegungstrajektorie (8, 8') bei unterschiedlich eingestellten Fokuslagen durchgeführt wird,
Auswerten (Schritt 23), ob bei einer einzelnen Schnittstruktur (31, 61) das Werkstück (5) im scheibenartigen Bereich (69) der Relativbewegungstrajektorie (8, 8') eine von mindestens einem Steg (87) gehaltene Scheibe (86) aufweist oder ob das Werkstück (5) im scheibenartigen Bereich der Relativbewegungstrajektorie (8, 8') eine gemäß der Relativbewegungstrajektorie (8, 8') geformte Öffnung (88) im Werkstück (5) aufweist, und
Zuordnen (Schritt 25) der Referenz-Fokuslage basierend auf der Auswertung der Schnittstrukturen (31, 61).

2. Verfahren nach Anspruch 1, wobei eine zentrale Gruppe (Z) von Schnittstrukturen (31, 61), bei denen das Werkstück (5) im scheibenartigen Bereich (69) eine von mindestens einem Steg (87) gehaltene Scheibe (86) aufweist, und auf jeder Seite der zentralen Gruppe (Z) eine Randgruppe (R) von Schnittstrukturen (31, 61), bei denen das Werkstück (5) im scheibenartigen Bereich (69) eine Öffnung (88) im Werkstück (5) aufweist, identifiziert werden, und
eine zentrale Position, die der zentralen Gruppe (Z) zugeordnet ist, oder einer zentralen Position zwischen den Randgruppen (R) der Referenz-Fokuslage zugeordnet wird.

3. Verfahren nach Anspruch 1 oder 2, wobei Testschnitte in einem Zentralbereich, in dem die Referenz-Fokuslage zu erwarten ist, und Testschnitte auf beiden Seiten des Zentralbereichs durchgeführt werden.

4. Verfahren nach einem der vorhergehenden Ansprüche wobei die Testschnitt-spezifischen Fokuslagen sich um eine Schrittweite in Propagationsrichtung unterscheiden.

5. Verfahren nach Anspruch 4, wobei die Schrittweite einstellbar ist.

6. Verfahren nach einem der vorhergehenden Ansprüche, wobei die Relativbewegungstrajektorie (8, 8') in dem mindestens einen Stegbereich (77) zwei entlang einander verlaufende Liniensegmente (73) aufweist, die durch einen vorgegebenen Abstand charakterisiert werden, und
wobei bei einer Positionierung des Werkstücks (5) in der Referenz-Fokuslage die erzeugte Schnittbreiten im Stegbereich im Bereich von 10 % bis 45 % des vorgegebenen Abstands liegen.

7. Verfahren nach einem der vorhergehenden Ansprüche, wobei die Relativbewegungstrajektorie (8, 8') im scheibenförmigen Bereich (69) eine nahezu geschlossene Ringform (67) aufweist, die an ihren Enden in Liniensegmente (73) des mindestens einen Stegbereichs (77) übergeht.

8. Verfahren nach einem der vorhergehenden Ansprüche, wobei die Relativbewegungstrajektorie (8, 8') zwei im Wesentlichen spiegelsymmetrisch verlaufende Trajektorienabschnitte (61A, 61B) aufweist, die in einem Zentralbereich (65) als gegenüberliegende halbkreisartige Segmente (67) geformt sind, zwischen denen der scheibenartiger Bereich (69) ausgebildet wird, und in Seitenbereichen (71A, 71B), die an den Zentralbereich (65) angrenzen und einander gegenüber liegen, als aneinander entlang verlaufende, beabstandete Liniensegmente (73) geformt sind, die zwei Stegbereiche (77) ausbilden.

9. Verfahren nach Anspruch 8, wobei sich die beabstandeten Liniensegmente (73) unterschiedlich weit vom Zentralbereich (65) weg erstrecken.

10. Verfahren nach einem der vorhergehenden Ansprüche, wobei das Auswerten (Schritt 23) einer der Schnittstrukturen (31) ein Anfahren und Bestrahlen des zugehörigen scheibenartigen Bereichs (69) sowie ein Detektieren von an der gehaltenen Scheibe (86) reflektierter Strahlung und/oder durch die Öffnung (88) im Werkstück (5) tretender Strahlung umfasst.

11. Verfahren nach einem der vorhergehenden Ansprüche, wobei das Auswerten (Schritt 23) der Schnittstruktur (31) ein optisches Aufnehmen eines Bildes (80) des Werkstücks (5) im Bereich der Sequenz von Testschnitten und eine Bildverarbeitung des Bildes (80) zur Erkennung von gehaltenen Scheiben (86) und/oder Öffnungen (88) im Werkstück (5) umfasst.

12. Verfahren nach einem der vorhergehenden Ansprüche, wobei die der Referenz-Fokuslage zugeordnete Fokuslage von einer Steuerung für die nachfolgende Bearbeitung und/oder für die genaue Positionierung des Fokus (35) auf der Oberfläche des Werkstücks (5) verwendet wird.

13. Werkzeugmaschine (1) mit
einer Laserbearbeitungsanlage (3) mit einem Lasersystem,
einer Werkstückhalterung (13),
einem Laserbearbeitungskopf (11), wobei der Laserbearbeitungskopf (11) mit dem Lasersystem optisch verbunden ist und eine Relativbewegung zwischen dem Laserbearbeitungskopf (11) und der Werkstückhalterung (13) zur Führung eines Laserstrahls (37) entlang einer Trajektorie über das Werkstück (5) bewirkbar ist,
einer Kamera (14) zur Aufnahme eines Bildes (80) von gemäß der Relativbewegungstrajektorie (8, 8') erzeugten Schnittstrukturen (31, 61) und **gekennzeichnet durch**
eine Steuerungseinheit mit Zugriff auf eine Relativbewegungstrajektorie (8, 8'), die zur Bestimmung einer Referenz-Fokuslage des Strahls (37) für die Durchführung der folgenden Schritte eingerichtet ist:
- Bereitstellen einer Relativbewegungstrajektorie (8, 8'), die einen scheibenartigen Bereich (69) hinsichtlich eines Umgebungsbereichs (44) abgrenzt, wobei der scheibenartige Bereich (69) über mindestens einen Stegbereich (77) mit dem Umgebungsbereich (44) verbunden ist,
- Durchführen (Schritt 21) einer Sequenz von Testschnitten an einem Werkstück (5), wobei bei jedem Testschnitt im Werkstück (5) eine Schnittstruktur (31, 61) durch Führen des Strahls (37) entlang der Relativbewegungstrajektorie (8, 8') geschnitten wird und das Schneiden entlang des mindestens einen Stegbereichs (77) der Relativbewegungstrajektorie (8, 8') bei unterschiedlich eingestellten Fokuslagen durchgeführt wird,
- Auswerten (Schritt 23), ob bei einer einzelnen Schnittstruktur (31, 61) das Werkstück (5) im scheibenartigen Bereich (69) der Relativbewegungstrajektorie (8, 8') eine von mindestens einem Steg (87) gehaltene Scheibe (86) aufweist oder ob das Werkstück (5) im scheibenartigen Bereich der Relativbewegungstrajektorie (8, 8') eine gemäß der Relativbewegungstrajektorie (8, 8') geformte Öffnung (88) im Werkstück (5) aufweist, und
Zuordnen (Schritt 25) der Referenz-Fokuslage basierend auf der Auswertung der Schnittstrukturen (31, 61).

14. Werkzeugmaschine (1) nach Anspruch 13, wobei die Steuerungseinheit ferner zur Durchführung eines Verfahrens zur Bestimmung einer Referenz-Fokuslage eines Strahls (37) nach einem der Ansprüche 2 bis 12 eingerichtet ist.

## Claims

1. A method for determining a reference focus position (35) of a beam of a beam-based machine tool using a control unit, **characterized in that** the control unit performs the following steps:
providing a relative motion trajectory (8, 8') which delimits a discoid area (69) with respect to a surrounding area (44), the discoid area (69) being connected to the surrounding area (44) via at least one bridge area (77),
performing (step 21) a sequence of test cuts on a workpiece (5), wherein for each test cut in the workpiece (5), a cutting structure (31, 61) is cut by guiding the beam (37) along the relative motion trajectory (8, 8') and the cutting is performed along the at least one bridge area (77) of the relative motion trajectory (8, 8') at differently set focus positions,
evaluating (step 23) whether for a single cutting structure (31, 61), the workpiece (5) in the discoid area (69) of the relative motion trajectory (8, 8') has a disc (86) held by at least one bridge (87) or whether the workpiece (5) has, in the discoid area of the relative motion trajectory (8, 8'), an opening (88) in the workpiece (5) formed in accordance with the relative motion trajectory (8, 8'), and
assigning (step 25) the reference focus position based on the evaluating of the cutting structures (31, 61).

2. The method according to claim 1, wherein a central group (Z) of cutting structures (31, 61) is identified, in which the workpiece (5) has a disc (86) held by at least one bridge (87) in the discoid area (69), and on each side of the central group (Z) an edge group (R) of cutting structures (31, 61) is identified, in which the workpiece (5) has an opening (88) in the workpiece (5) in the discoid area (69), and
a central position, which is assigned to the central group (Z), or a central position between the edge groups (R) is assigned to the reference focus position.

3. The method according to claim 1 or 2, wherein test cuts are made in a central area where the reference focus position is expected to be, and test cuts are made on both sides of the central area.

4. The method according to any one of the preceding claims, wherein the test cut-specific focus positions differ by one step size in the direction of propagation.

5. The method according to claim 4, wherein the step size is adjustable.

6. The method according to any one of the preceding claims, wherein the relative motion trajectory (8, 8') in the at least one bridge area (77) comprises two line segments (73) extending along one another, which are **characterized by** a predetermined distance, and
wherein, when the workpiece (5) is positioned in the reference focus position, cut widths generated in the bridge area are in the range from 10% to 45% of the predetermined distance.

7. The method according to any one of the preceding claims, wherein the relative motion trajectory (8, 8') in the discoid area (69) has an substantially closed annular shape (67), which at its ends merges into two line segments (73) of the at least one bridge area (77).

8. The method according to any one of the preceding claims, wherein the relative motion trajectory (8, 8') comprises two substantially mirror-symmetrically extending trajectory sections (61A, 61B), which are formed in a central area (65) as opposing semicircular segments (67), between which the discoid area (69) is formed, and are formed in side areas (71A, 71B), which are adjacent to the central area (65) and lay opposite to each other, as spaced apart line segments (73) extending along each other, forming two bridge areas (77).

9. The method according to claim 8, wherein the spaced apart line segments (73) extend different distances away from the central area (65).

10. The method according to any one of the preceding claims, wherein the evaluating (step 23) of one of the cutting structures (31) comprises approaching and irradiating the associated discoid area (69) and detecting radiation reflected on the held disc (86) and/or radiation passing through the opening (88) in the workpiece (5).

11. The method according to any one of the preceding claims, wherein the evaluating (step 23) of the cut structure (31) comprises optically recording an image (80) of the workpiece (5) in the area of the sequence of test cuts and processing an image (80) for recognition of held discs (86) and/or openings (88) in the workpiece (5).

12. The method according to any one of the preceding claims, wherein the focus position associated with the reference focus position is used by a controller for the subsequent machining and/or for the exact positioning of the focus (35) on the surface of the workpiece (5).

13. A machine tool (1) comprising:
a laser processing system (3) with a laser system,
a workpiece holder (13),
a laser processing head (11), wherein the laser processing head (11) is optically connected to the laser system and a relative motion between the laser processing head (11) and the workpiece holder (13) can be effected for guiding a laser beam (37) along a trajectory over the workpiece (5),
a camera (14) for recording an image (80) of cutting structures (31, 61) generated according to the relative motion trajectory (8, 8'), and **characterized by**
a control unit with access to a relative motion trajectory (8, 8'), which is set up for determining a reference focus position of a beam (37) to perform the following steps:
providing a relative motion trajectory (8, 8'), which delimits a discoid area (69) with respect to a surrounding area (44), the discoid area (69) being connected to the surrounding area (44) via at least one bridge area (77),
performing (step 21) a sequence of test cuts on a workpiece (5), wherein for each test cut in the workpiece (5) a cut structure (31, 61) is cut by guiding the beam (37) along the relative motion trajectory (8, 8') and the cutting is performed along the at least one bridge area (77) of the relative motion trajectory (8, 8') at differently set focus positions,
evaluating (step 23) whether for a single cutting structure (31, 61), the workpiece (5) in the discoid area (69) of the relative motion trajectory (8, 8') has a disc (86) held by at least one bridge (87) or whether the workpiece (5) in the discoid area of the relative motion trajectory (8, 8') has an opening (88) in the workpiece (5) shaped according to the relative motion trajectory (8, 8'), and
assigning (step 25) the reference focus position based on the evaluation of the cutting structures (31, 61).

14. The machine tool (1) according to claim 13, wherein the control unit is set up to perform a method for determining a reference focus position of a beam (37) according to any one of claims 2 to 12.

## Revendications

1. Procédé de détermination d'une position focale de référence (35) d'un faisceau d'une machine-outil basée sur un faisceau en utilisant une unité de commande, **caractérisé en ce que** l'unité de commande exécute les étapes suivantes :
préparation d'une trajectoire de déplacement relatif (8, 8'), qui délimite une zone en forme de disque (69) eu égard à une zone environnante (44), sachant que la zone en forme de disque (69) est reliée par au moins une zone de nervure (77) à la zone environnante (44),
exécution (étape 21) d'une séquence de coupes d'essai sur une pièce (5), sachant qu'à chaque coupe d'essai dans la pièce (5), une structure de coupe (31, 61) est découpée en guidant le faisceau (37) le long de la trajectoire de déplacement relatif (8, 8') et la coupe le long d'au moins une zone de nervure (77) de la trajectoire de déplacement relatif (8, 8') est exécutée à des positions focales réglées différemment,
évaluation (étape 23) afin de savoir si pour une structure de coupe individuelle (31, 61), la pièce (5) comporte dans la zone en forme de disque (69) de la trajectoire de déplacement relatif (8, 8'), un disque (86) maintenu par au moins une nervure (87) ou si la pièce (5) comporte dans la zone en forme de disque de la trajectoire de mouvement relatif (8, 8'), une ouverture (88) dans la pièce (5) formée selon la trajectoire de déplacement relatif (8, 8'), et
attribution (étape 25) de la position focale de référence en se basant sur l'évaluation des structures de coupe (31, 61).

2. Procédé selon la revendication 1, sachant que sont identifiés un groupe central (Z) de structures de coupe (31, 61), pour lesquelles la pièce (5) comporte un disque (86) maintenu par au moins une nervure (87) dans la zone en forme de disque (69) et sur chaque côté du groupe central (Z), un groupe marginal (R) de structures de coupe (31, 61), pour lesquelles la pièce (5) comporte dans la zone en forme de disque (69) une ouverture (88) dans la pièce (5), et
une position centrale, qui est attribuée au groupe central (Z) ou est attribuée à une position centrale entre les groupes marginaux (R) de la position focale de référence.

3. Procédé selon la revendication 1 ou 2, sachant que des coupes d'essai dans une zone centrale dans laquelle la position focale de référence peut être attendue, et des coupes d'essai, sont exécutées sur les deux côtés de la zone centrale.

4. Procédé selon l'une quelconque des revendications précédentes, sachant que les positions focales spécifiques à la coupe d'essai se différencient d'une largeur de coupe en direction de la propagation.

5. Procédé selon la revendication 4, sachant que la largeur de coupe peut être réglée.

6. Procédé selon l'une quelconque des revendications précédentes, sachant que la trajectoire de déplacement relatif (8, 8') comporte dans au moins une zone de nervure (77) deux segments linéaires (73) passant le long l'un de l'autre, qui sont **caractérisés par** une distance prédéfinie, et
sachant que lors d'un positionnement de la pièce (5) dans la position focale de référence, les largeurs de coupe produites dans la zone de nervure se situent dans une plage de 10 % à 45 % de la distance prédéfinie.

7. Procédé selon l'une quelconque des revendications précédentes, sachant que la trajectoire de déplacement relatif (8, 8') comporte dans la zone en forme de disque (69) une forme annulaire (67) presque fermée, qui passe à ses extrémités dans des segments de ligne (73) d'au moins une zone de nervure (77).

8. Procédé selon l'une quelconque des revendications précédentes, sachant que la trajectoire de déplacement relatif (8, 8') comporte deux sections de trajectoire (61A, 61B) passant pour l'essentiel en symétrie spéculaire, qui sont formées dans une zone centrale (65) en tant que segments (67) semi-circulaires opposés entre lesquelles est constituée la zone en forme de disque (69) et dans des zones latérales (71A, 71B), qui viennent toucher la zone centrale (65) et sont opposées l'une à l'autre, sont formées en tant que segments de ligne (73) espacés, passant le long l'un de l'autre, qui constituent deux zones de nervure (77).

9. Procédé selon la revendication 8, sachant que les segments de ligne espacés (73) s'écartent d'une distance différente de la zone centrale (65).

10. Procédé selon l'une quelconque des revendications précédentes, sachant que l'évaluation (étape 23) d'une des structures de coupe (31) comprend une approche et une irradiation de la zone (69) en forme de disque correspondante ainsi qu'une détection du faisceau réfléchi sur le disque maintenu (86) et/ou du faisceau passant par l'ouverture (88) dans la pièce (5).

11. Procédé selon l'une quelconque des revendications précédentes, sachant que l'évaluation (étape 23) de la structure de coupe (31) comprend un enregistrement optique d'une image (80) de la pièce (5) dans la zone de la séquence des coupes d'essai et un traitement de l'image (80) pour identifier des disques maintenus (86) et/ou des ouvertures (88) dans la pièce (5).

12. Procédé selon l'une quelconque des revendications précédentes, sachant que la position focale attribuée à la position focale de référence est utilisée par une commande pour l'usinage successif et/ou pour le positionnement exact du foyer (35) sur la surface de la pièce (5).

13. Machine-outil (1) avec
une installation d'usinage au laser (3) avec un système de laser,
un porte-pièce (13),
une tête d'usinage au laser (11), sachant que la tête d'usinage au laser (11) est reliée optiquement au système de laser et un déplacement relatif entre la tête d'usinage au laser (11) et le porte-pièce (13) peut être réalisé sur la pièce (5) pour guider un faisceau laser (37) le long d'une trajectoire,
une caméra (14) pour enregistrer une image (80) des structures de coupe (31, 61) produites selon la trajectoire de déplacement relatif (8, 8') et **caractérisée par**
une unité de commande avec accès à une trajectoire de déplacement relatif (8, 8'), qui est agencée pour déterminer d'une position focale de référence d'un faisceau (37) pour exécuter les étapes suivantes :
préparation d'une trajectoire de déplacement relatif (8, 8'), qui délimite une zone en forme de disque (69) eu égard à une zone environnante (44), sachant que la zone en forme de disque (69) est reliée par au moins une zone de nervure (77) à la zone environnante (44),
exécution (étape 21) d'une séquence de coupes d'essai sur une pièce (5), sachant qu'à chaque coupe d'essai dans la pièce (5), une structure de coupe (31, 61) est découpée en guidant le faisceau (37) le long de la trajectoire de déplacement relatif (8, 8') et la coupe le long d'au moins une zone de nervure (77) de la trajectoire de déplacement relatif (8, 8') est exécutée à des positions focales réglées différemment,
évaluation (étape 23) afin de savoir si pour une structure de coupe individuelle (31, 61), la pièce (5) comporte dans la zone en forme de disque (69) de la trajectoire de déplacement relatif (8, 8') un disque (86) maintenu par au moins une nervure (87) ou si la pièce (5) comporte dans la zone en forme de disque de la trajectoire de mouvement relatif (8, 8'), une ouverture (88) dans la pièce (5) formée selon la trajectoire de déplacement relatif (8, 8'), et
attribution (étape 25) de la position focale de référence en se basant sur l'évaluation des structures de coupe (31, 61).

14. Machine-outil (1) selon la revendication 13, sachant que l'unité de commande est agencée pour l'exécution d'un procédé de détermination d'une position focale de référence d'un faisceau (37) selon l'une quelconque des revendications 2 à 12.
